# EUROPÄISCHE PATENTSCHRIFT

(11) **EP 3 760 424 B1**
(45) Veröffentlichungstag und Bekanntmachung des Hinweises auf die Patenterteilung: **28.08.2024**
(21) Anmeldenummer: 20178589.6
(22) Anmeldetag: 05.06.2020
(51) Int. Cl.: B29D 30/60, B29D 30/62

(54) **VERFAHREN ZUM HERSTELLEN EINES FAHRZEUGLUFTREIFENS, VERWENDUNG VON STRIP-WINDING ZUM AUFWICKELN EINER ODER MEHRERER KAUTSCHUKKOMPONENTEN, VORRICHTUNG ZUR DURCHFÜHRUNG DES VERFAHRENS UND EINEN FAHRZEUGLUFTREIFEN HERSTELLBAR ODER HERGESTELLT GEMÄSS DEM VERFAHREN**
METHOD FOR THE PRODUCTION OF A PNEUMATIC VEHICLE TYRE, USE OF STRIP WINDING FOR WINDING ONE OR MORE RUBBER COMPONENTS, DEVICE FOR CARRYING OUT THE METHOD AND A PNEUMATIC VEHICLE TYRE WHICH IS PRODUCED OR CAN BE PRODUCED ACCORDING TO THE METHOD
PROCÉDÉ DE FABRICATION D'UN PNEUMATIQUE DE VÉHICULE, UTILISATION D'ENROULEMENT DE BANDE POUR ENROULER AU MOINS UN COMPOSANT EN CAOUTCHOUC, DISPOSITIF DE MISE EN UVRE DUDIT PROCÉDÉ ET PNEUMATIQUE DE VÉHICULE POUVANT ÊTRE FABRIQUÉ OU ÉTANT FABRIQUÉ SELON LEDIT PROCÉDÉ

(30) Priorität: 04.07.2019 DE 102019209865
(43) Veröffentlichungstag der Anmeldung: 06.01.2021
(73) Patentinhaber: Continental Reifen Deutschland GmbH, 30175 Hannover (DE)
(72) Erfinder: Pfaff, Florian, 30419 Hannover (DE); Sharifi, Monir, 30419 Hannover (DE)
(74) Vertreter: Continental Corporation

(56) Entgegenhaltungen:
- EP-A1- 1 612 034
- EP-A1- 1 657 050
- EP-A1- 2 230 099
- EP-A1- 2 805 838
- EP-A2- 1 175 992
- EP-A2- 1 629 964
- JP-A- 2008 024 096
- JP-A- 2014 046 885
- US-A1- 2014 053 961

## Beschreibung

Die Erfindung betrifft ein Verfahren zum Herstellen eines Fahrzeugluftreifens. Die Erfindung betrifft auch eine Verwendung von Strip-Winding zum Aufwickeln einer oder mehrerer Kautschukkomponenten sowie eine Vorrichtung zur Durchführung des Verfahrens und einen Fahrzeugluftreifen herstellbar oder hergestellt gemäß dem Verfahren.

Seit einiger Zeit wird bei der Reifenherstellung das so genannte Strip-Winding verwendet. Dabei wird ein Endlos-Streifen mit relativ kleinem Durchmesser helikal auf eine Festigkeitsträgerlage aufgewickelt, sodass eine Lage aus nebeneinanderliegenden Kautschukstreifen entsteht. Dieses Verfahren ermöglicht es, bei der Reifenherstellung zwischen verschiedenen Laufstreifengeometrien sehr flexibel und schnell zu variieren, da der Laufstreifen beim helikalen Aufwickeln Schritt für Schritt gebildet wird. Ein Nachteil ist jedoch, dass das Strip-Winding aufgrund des schrittweisen Auftragens eine sehr geringe Produktionsgeschwindigkeit aufweist.

Im Stand der Technik sind verschiedene Vorrichtungen und Reifen bekannt, bei denen das sogenannte Strip-Winding eingesetzt wird:
EP 1632367 A1 offenbart einen "Luftreifen mit einem leitfähigen Laufflächenabschnitt, der auf einer Innenseite eines Laufflächenabschnitts angeordnet ist [...], in dem ein Gummistreifen spiralförmig aufgewickelt ist und in Umfangsrichtung übereinander angeordnet sind, wobei eine Außenfläche des Laufflächenkautschukbereichs eine Laufflächen-Boden-Kontaktfläche bildet, wobei eine Innenfläche des Laufflächenkautschukbereichs mit dem leitfähigen Teil der Lauffläche in Kontakt steht und mindestens einen Teil des Laufflächenbereichs bildet" (s. Anspruch 1).
EP2939825 B1 offenbart eine "Vorrichtung (1) zum Verbinden eines Kautschukstreifens, umfassend einen Aufleger (4), um einen unvulkanisierten Kautschukstreifen (T) zu einem nichtlinearen zylinderartigen Wickelkörper (3) zu transportieren, der drehbar betätigt ist, und um den Kautschukstreifen (T) um den Wickelkörper (3) herum zu verbinden" (s. Anspruch 1).
DE60211367 T2 offenbart einen "Luftreifen ( 1 ), wobei ein Laufflächenabschnitt ( 2 ) einen mit Kurzfasern gemischten Gummiabschnitt ( 10 ) umfasst, der aus mit Kurzfasern gemischtem Gummi hergestellt ist, der produziert wird, indem Kurzfasern (f) in Gummi eingeschlossen werden, wobei der mit Kurzfasern gemischte Gummiabschnitt ( 10 ) die Laufflächen-Oberfläche ( 2S ) in mindestens einem Bereich (Y1) zwischen einem äußeren Bodenkontaktende (Eo), das an der Außenseite eines Fahrzeugs angeordnet ist, wenn der Reifen an dem Fahrzeug montiert ist, und einem Reifenäquator (C) bildet" (s. Anspruch 1).
EP 1612034 A1 offenbart ein Verfahren zum Bilden eines Laufstreifenrohlings, mit dem es möglich ist, einen Laufstreifenrohgummi mit einer doppellagigen Struktur, bestehend aus einer Base- und einer Cap-Schicht, mit hoher Qualität zu bilden. Sowohl die Base- als auch die Cap Schicht wird durch eine Schneideinheit in gleichgroße Abschnitte geschnitten, sodass die Base-Komponenten um eine anschließende Trommel gewickelt werden kann. Die Cap--Schicht wird anschließend aufgewickelt.
Weitere Verfahren und Vorrichtungen zur Herstellung von Fahrzeugluftreifen sind in den Dokumenten EP 1 175 992 A2, EP 2 230 099 A1, JP 2014 046885 A und JP 2008 024096 A offenbart.

Eine Aufgabe, die der Erfindung zugrunde liegt, besteht darin, ein Verfahren zum Herstellen eines Fahrzeugluftreifens bereitzustellen, welches eine möglichst hohe Produktionsgeschwindigkeit in Bezug auf die Herstellung von Fahrzeugluftreifen aufweist und/oder eine möglichst präzise Herstellung von Laufstreifen ermöglicht, insbesondere bei sehr filigranen Laufstreifenabschnitten oder -geometrien. Demzufolge war es auch eine Aufgabe, die der Erfindung zugrunde liegt, einen Fahrzeugluftreifen schneller und formgenauer herzustellen im Vergleich zu im Stand der Technik bekannten Verfahren.

Gelöst wird diese Aufgabe erfindungsgemäß durch ein Verfahren zum Herstellen eines Fahrzeugluftreifens, umfassend die folgenden Schritte:
A) Ausformen mindestens einer Kautschukmischung zur Herstellung eines Fahrzeugluftreifens, sodass ein Kautschukprofil zur Herstellung eines ersten Cap-Abschnittes eines Laufstreifens eines Fahrzeugluftreifens entsteht,
B) Verarbeiten des Kautschukprofils, sodass ein erster Cap-Abschnitt eines Laufstreifen eines Fahrzeugluftreifens resultiert, wobei das Verarbeiten unter anderem mittels einer Schneideinheit durchgeführt wird, sodass ein Teil des Kautschukprofils (2) herausgeschnitten wird,
C) Aufwickeln einer oder mehrerer weiterer Kautschukkomponenten auf den ersten Cap-Abschnitt mittels Strip-Winding, sodass ein Reifenrohling zum Vulkanisieren entsteht, wobei der Reifenrohling einen unvulkanisierten Laufstreifen
   - mit einem zweiten Cap-Abschnitt bestehend aus der einen oder den mehreren weiteren Kautschukkomponenten
      und
   - mit dem ersten Cap-Abschnitt
   umfasst,
D) Vulkanisieren des entstandenen Reifenrohlings, sodass ein Fahrzeugluftreifen umfassend einen Laufstreifen mit dem ersten Cap-Abschnitt und mit dem zweiten, aus der einen oder den mehreren weiteren Kautschukkomponenten bestehenden Cap-Abschnitt entsteht.

Es ist eine große Leistung der vorliegenden Erfindung herausgefunden zu haben, dass durch die Kombination von Ausformen nach der Extrusion und dem Aufwickeln einer Kautschukkomponenten mittels Strip-Winding Fahrzeugluftreifen mit verschiedenen Cap-Komponenten schneller hergestellt werden können im Vergleich zu Herstellungsverfahren, bei denen ausschließlich das Ausformen nach der Extrusion oder ausschließlich den besagten Aufwickelprozess mittels Strip-Winding, welcher im Rahmen der vorliegenden Erfindung vereinfacht der Aufwickelprozess genannt wird, erreicht wird. Der schnellere Herstellungsprozess beruht auf der Reduzierung eines häufigen Wechsels von Endschablonen zum Ausformen nach der Extrusion und Beibehaltung der Extrusion eines möglichst großen Teils bezogen auf die gesamte Cap-Komponente, welche später die Cap des Laufstreifens im final resultierenden Fahrzeugluftreifens bildet. Die Kombination der vorstehend beschriebenen Prozesse, d.h. das Ausformen nach der Extrusion und der besagten Aufwickelprozess, führen daher nicht nur zu einer Kombination ihrer Vorteile, sondern zu einer die bloße Kombination ihrer Vorteile übersteigenden Beschleunigung des Herstellungsverfahrens für Fahrzeugluftreifen. Dies führt zu einer ungefähr zehnfachen Beschleunigung des Herstellungsprozesses im Vergleich zu Herstellungsprozessen, welche ausschließlich mit dem Ausformen oder ausschließlich mit dem Aufwickelprozess arbeiten.

Darüber hinaus bewirkt der Aufwickelprozess zusätzlich, dass zudem auch sehr filigrane Kautschukkomponenten vom formgetreu hergestellt werden können und die Bodenkontaktfläche des entstehenden Fahrzeugluftreifens ebener und damit formstabiler ist als bei Fahrzeugluftreifen, bei denen der Laufstreifen ausschließlich durch das Ausformen nach der Extrusion hergestellt wurde. Daher ist es wie nachstehend beschrieben besonders vorteilhaft die kleineren Komponenten der Cap des Laufstreifens des resultierenden erfindungsgemäßen Fahrzeugluftreifens mittels des besagten Aufwickelprozess herzustellen.

Im Rahmen der vorliegenden Erfindung muss der ersten mindestens eine Cap-Komponente umfassende Cap-Abschnitt um mindestens einen weiteren Cap-Abschnitt mit weiteren Kautschukkomponenten ergänzt werden, um später einen mehrkomponentigen Laufstreifen, auch MCT oder MCT-Laufstreifen genannt, in einem resultierenden erfindungsgemäßen Fahrzeugluftreifen zu bilden.

Im Rahmen der vorliegenden Erfindung umfasst der Ausdruck "Cap-Abschnitt" einen Abschnitt einer Cap eines Laufstreifens eines Fahrzeugluftreifens, welcher eine oder mehr Cap-Komponenten umfassen kann. Im Rahmen der vorliegenden Erfindung umfasst der Ausdruck "Kautschukkomponente" jede räumlich getrennte im Laufstreifen des Fahrzeugluftreifens angeordnete geometrische Komponente wie eine Cap-, Wing- oder Base-Komponente. Eine Kautschukkomponente ist im Rahmen der vorliegenden Erfindung daher eine Kautschukmischung, welche nach dem Mischen der Kautschukmischungskomponenten der Kautschukmischung entweder durch eine Endschablone oder durch eine Düse in eine definierte geometrische Form ausgeformt wurde.

Der Aufwickelprozess oder das gleichbedeutende Strip-Winding ist dem Fachmann aus dem Stand der Technik bekannt.

Der größte Unterschied zu einem im Stand der Technik bekannten Verfahren ist, dass bei dem Ausformverfahren gemäß Schritt A) eines erfindungsgemäßen Verfahrens zuerst ein geometrisch wohldefiniertes Kautschukprofil in Form eines Endlosstreifens hergestellt wird, welches bereits eine dem entsprechenden Laufstreifenabschnitt entsprechenden Querschnittform aufweist und später so zurechtgeschnitten wird, dass es die spätere Auflegeinheit genau einmal umgibt und auf der Auflegeinheit zu einem ersten Cap-Abschnitt weiterverarbeitet wird, wobei auf der Auflegeinheit der ersten Cap-Abschnitt durch Spleißen eine toroidale Form erhält.

Bei dem Aufwickelprozess hingegen wird ein Kautschukstrang mehrere Male spiralförmig um die Auflegeinheit gewickelt, bis die neben oder übereinandergelegten Abschnitte des Kautschukstrangs die gewollte geometrische Form des Laufstreifenabschnittes im resultierenden Fahrzeugluftreifen ergeben.

Im Rahmen der vorliegenden Erfindung umfasst der Ausdruck "Kautschukprofil" insbesondere eine extrudierte und anschließend durch eine Endschablone ausgeformte Kautschukmischung in Form eines Endlosstreifens.

Im Rahmen der vorliegenden Erfindung umfasst der Ausdruck "Kautschukkomponente" insbesondere eine extrudierte und anschließend mit optional weiteren Kautschukkomponenten zu einem Kautschukprofil ausgeformte Kautschukmischung. Die verschiedenen Kautschukkomponenten können sich entweder aufgrund ihrer Geometrie oder ihrer Position im resultierenden Kautschukprofils voneinander unterscheiden oder aufgrund ihrer Kautschukzusammensetzung.

Bevorzugt wird die mindestens eine Kautschukmischung in Schritt A) eines erfindungsgemäßen Verfahrens nicht nur mittels einer Endschablone eines Extruders ausgeformt, sondern zuvor auch mittels eines Extruderkopfes extrudiert und bevorzugt mittels einer Vorschablone eines Extruders zu der Endschablone hingeleitet.

Bevorzugt ist ein erfindungsgemäßes Verfahren wie vorstehend beschrieben oder wie vorstehend als bevorzugt beschrieben, wobei der in Schritt B) resultierende erste Cap-Abschnitt in einer toroidalen Form vorliegt, wobei die sich in radialer Richtung erstreckende Höhe des ersten Cap-Abschnittes in toroidaler Form im Bereich von 0,1 bis 10 cm liegt und die sich in axialer Richtung erstreckende Breite des ersten Cap-Abschnittes in toroidaler Form drei bis 50-mal der Höhe entspricht.

Bevorzugt ist ein erfindungsgemäßes Verfahren wie vorstehend als bevorzugt beschrieben oder wie vorstehend als besonders bevorzugt beschrieben, wobei das Aufwickeln in Schritt C) so durchgeführt wird, dass ein Kautschukstrang helikal auf die radial äußere Schicht des ersten Cap-Abschnittes in toroidaler Form helikal aufgewickelt wird, wobei der Kautschukstrang bevorzugt eine maximale Quererstreckung von 5 cm aufweist.

Bevorzugt ist ein erfindungsgemäßes Verfahren wie vorstehend beschrieben oder wie vorstehend als bevorzugt beschrieben, wobei die Gesamtfläche des Querschnittes des zweiten Cap-Abschnittes des in Schritt D) resultierenden Fahrzeugluftreifens maximal der Hälfte der Gesamtfläche des Querschnittes des gesamten Laufstreifens des in Schritt D) resultierenden Fahrzeugluftreifens entspricht, bevorzugt maximal ein Drittel der Gesamtfläche des Querschnittes des gesamten Laufstreifens des in Schritt D) resultierenden Fahrzeugluftreifens, besonders bevorzugt maximal ein Viertel der Gesamtfläche des Querschnittes des gesamten Laufstreifens des in Schritt D) resultierenden Fahrzeugluftreifens, ganz besonders bevorzugt maximal ein Fünftel der Gesamtfläche des Querschnittes des gesamten Laufstreifens des in Schritt D) resultierenden Fahrzeugluftreifens.

Ein Vorteil des vorstehend beschriebenen Aspekts der vorliegenden Erfindung ist, dass eine noch stärkere Beschleunigung als vorstehend beschrieben erreicht werden kann, wenn der ausgeformte Anteil des Laufstreifens des resultierenden Fahrzeugluftreifens entsprechend größer ist als der aufgewickelte Anteil des Laufstreifens des resultierenden Fahrzeugluftreifens, wobei der aufgewickelte Anteil des Laufstreifens der mittels des besagten Aufwickelprozess oder mittels des gleichbedeutenden Strip-Winding hergestellten Abschnittes des Laufstreifens des resultierenden Fahrzeugluftreifens ist.

Bevorzugt ist ein erfindungsgemäßes Verfahren wie vorstehend beschrieben oder wie vorstehend als bevorzugt beschrieben, wobei
- der zweite Cap-Abschnitt des in Schritt C) entstehenden Reifenrohlings mehrere weitere Kautschukkomponente umfasst, beispielsweise zur Herstellung eines Multi-Component-Treads (MCT) genannt,
   und/oder
- die maximale Quererstreckung jeder weiteren Kautschukkomponente des zweiten Cap-Abschnittes des in Schritt C) entstehenden Reifenrohlings im Bereich von 1 bis 50 cm liegt, bevorzugt im Bereich von 1 bis 10 cm.

Ein Vorteil des vorstehend beschriebenen Aspekts der vorliegenden Erfindung ist, dass insbesondere bei MCT-Fahrzeugluftreifen Kautschukkomponenten mit verschiedener Geometrie oder Kautschukzusammensetzung an der Bodenkontaktfläche des resultierenden Fahrzeugluftreifens angrenzen und somit schneller und formstabiler mittels des Aufwickelprozess es hergestellt werden können. Dies gilt insbesondere deswegen, weil die vorstehend beschriebenen Kautschukkomponenten des MCT-Fahrzeugluftreifens meist nur einen sehr kleinen Anteil des Laufstreifens eines erfindungsgemäßen Fahrzeugluftreifens darstellen und/oder sehr filigranen sind.

Bevorzugt ist ein erfindungsgemäßes Verfahren wie vorstehend beschrieben oder wie vorstehend als bevorzugt beschrieben, wobei das in Schritt A) entstehende Kautschukprofil
- zumindest in einer Erstreckungsrichtung einen Durchmesser von mehr als 5 cm aufweist, bevorzugt mehr als 10 cm, ganz besonders bevorzugt mehr als 20 cm,
   und/oder
- eine, zwei, drei, vier, fünf, oder sechs Kautschukkomponenten aufweist, wobei bis zu vier Kautschukkomponenten aus einer Cap-Mischung und bis zu zwei Kautschukkomponenten aus einer Wing-Mischung bestehen können.

Zusätzlich könnte ein solches Kautschukprofils auch eine elektrisch leitfähige Kautschukkomponente zum Verhindern des elektrischen Aufladens des Fahrzeugluftreifens aufweisen. Im Rahmen der vorliegenden Erfindung ist eine Kautschukkomponente elektrisch leitfähig, wenn sie eine elektrische Leitfähigkeit von mindestens 1 S/cm bei 20 °C aufweist.

Bevorzugt ist ein erfindungsgemäßes Verfahren wie vorstehend beschrieben oder wie vorstehend als bevorzugt beschrieben, wobei das in Schritt A) entstehenden Kautschukprofil eine elektrisch leitfähige Kautschukkomponente zum Verhindern des elektrischen Aufladens des Fahrzeugluftreifens aufweist und je eine weitere Kautschukkomponente im Schritt C) des erfindungsgemäßen Verfahrens von der elektrisch leitfähigen Kautschukmischung bis zu jeder Reifenschulter des entstehenden Reifenrohlings aufgewickelt wird.

Ein Vorteil des vorstehend beschriebenen Aspekts ist, dass insbesondere das Herstellen einer elektrisch leitfähigen Kautschukkomponente wie vorstehend beschrieben mittels des Strip-Winding ist und die Produktion eines Fahrzeugluftreifens übermäßig verlängert.

Bevorzugt ist ein erfindungsgemäßes Verfahren wie vorstehend beschrieben oder wie vorstehend als bevorzugt beschrieben, wobei die eine oder die mehreren weiteren Kautschukkomponenten des zweiten Cap-Abschnittes des Rohlings aus einer Cap-Kautschukmischung und/oder einer Wing-Kautschukmischung bestehen. Optional kann eine der mehreren weiteren Kautschukkomponenten aus einer elektrisch leitfähigen Kautschukmischung bestehen.

Bevorzugt ist ein erfindungsgemäßes Verfahren wie vorstehend beschrieben oder wie vorstehend als bevorzugt beschrieben, wobei der Schritt B) des Verfahrens den folgenden Schritt B-C) umfasst:
B-C) Auflegen des ersten Cap-Abschnittes zur Herstellung eines Laufstreifenabschnittes eines Fahrzeugluftreifens auf eine Auflegeinheit, bevorzugt auf eine Karkasse- und/oder Reifenaufbautrommel, bevorzugt sodass der erste Cap-Abschnitt die Auflegeinheit einmal umgibt, wobei der ersten Cap-Abschnitt auf der Auflegeinheit durch Spleißen eine bevorzugte toroidale Form erhält und somit zu einem ersten Cap-Abschnitt eines Laufstreifenabschnittes eines Fahrzeugluftreifens wird.

Ein Vorteil des vorstehend beschriebenen Aspekts der vorliegenden Erfindung ist, dass das Aufwickeln auf einer Trommeleinheit wie einer Karkasstrommel oder einer Reifenaufbautrommel zu einer weiteren Beschleunigung des Reifenherstellungsprozesses im Vergleich zu erfindungsgemäßen Verfahren ohne Trommeleinheit führt.

Im Rahmen der vorliegenden Erfindung umfasst der Ausdruck "Auflegeinheit" insbesondere Trommeleinheiten wie eine Karkasstrommel oder eine Reifenaufbautrommel. In einem erfindungsgemäßen Verfahren kann das Aufwickeln im Schritt C) auf derselben Auflegeinheit wie im Schritt B-C) durchgeführt werden oder auf einer weiteren Auflegeinheit.

Wie im Stand der Technik bekannt erfolgt nach dem Auflegen auf einer Trommeleinheit das sogenannte Spleißen des besagten ersten Cap-Abschnittes an seinen aneinander liegenden Enden, um die Stabilität des resultierenden Verzug Luftreifens zu erhöhen.

Bevorzugt ist ein erfindungsgemäßes Verfahren wie vorstehend beschrieben oder wie vorstehend als bevorzugt beschrieben, wobei das Kautschukprofil zur Herstellung eines ersten Cap-Abschnittes eines Laufstreifens eines Fahrzeugluftreifens so ausgebildet ist, dass das Kautschukprofil einen rechteckigen oder trapezförmigen zur Längsrichtung senkrecht verlaufende Querschnitt aufweist, wobei die Quer- oder Höhenerstreckung des Querschnitts bevorzugt im Bereich von 0,1 bis 1 m liegt.

Ein Vorteil des vorstehend beschriebenen Aspekts der vorliegenden Erfindung ist, dass wie bereits vorstehend beschrieben das ausformen zum Herstellen von großen Laufstreifenabschnitten mit einer einfachen Geometrie, beispielsweise mit einem trapezförmigen oder rechteckigen Querschnitt, besser geeignet ist.

Besonders bevorzugt ist ein erfindungsgemäßes Verfahren wie vorstehend beschrieben oder wie vorstehend als bevorzugt beschrieben, wobei das in Schritt A) entstehenden

Kautschukprofil eine elektrisch leitfähige Kautschukkomponente zum Verhindern des elektrischen Aufladens des Fahrzeugluftreifens und einen rechteckigen oder trapezförmigen zur Längsrichtung senkrecht verlaufende Querschnitt aufweist und in Schritt C) eine der mehreren weiteren Kautschukkomponenten elektrisch leitfähig ist, wobei die elektrisch leitfähige weiterer Kautschukkomponente auf die elektrisch leitfähigen Kautschukkomponente des ersten Cap-Abschnittes aufgewickelt wird.

Ein Vorteil des vorstehend beschriebenen Aspekts der vorliegenden Erfindung ist, dass das Kautschukprofil aufgrund seiner einfachen Geometrie schnell hergestellt werden kann und aufgrund der Flexibilität des Strip-Windings eine elektrisch leitfähige Kautschukkomponente zum Verhindern des elektrischen Aufladens im resultierenden Fahrzeugluftreifen realisiert werden kann. Ein solches Herstellungsverfahren gemäß der vorliegenden Erfindung ermöglicht eine höhere Produktionsgeschwindigkeit als im Stand der Technik bekannte Verfahren.

Bevorzugt ist ein erfindungsgemäßes Verfahren wie vorstehend beschrieben oder wie vorstehend als bevorzugt beschrieben, wobei in Schritt C) eine erste Schicht des zweiten Cap-Abschnittes des Laufstreifens des Fahrzeugluftreifens entsteht, wobei die erste Schicht aus mindestens einer helikal aufgewickelten weiterer Kautschukkomponente besteht, und das Verfahren zusätzlich den folgenden Schritt C-D) umfasst:
C-D) Aufwickeln mindestens einer zweiten weiteren Kautschukkomponente auf die in Schritt C) entstandene erste Schicht des zweiten Cap-Abschnittes des Laufstreifens des Fahrzeugluftreifens, wobei das Aufwickeln der zweiten weiteren Kautschukkomponente bevorzugt ebenfalls helikal wie vorstehend beschrieben durchgeführt wird.

Ein Vorteil des vorstehend beschriebenen Aspekts der vorliegenden Erfindung ist, dass bereits der Reifenrohling des vorstehend als bevorzugt beschriebene Verfahren eine glattere und formgetreuere Bodenkontaktfläche aufweist als Reifenrohlinge, bei denen der radial äußerste Laufstreifenabschnitt nur aus einer einzigen aufgewickelten Schicht einer Kautschukkomponente besteht. Dies verhindert insbesondere das Aufkommen von während der Vulkanisation aufkommenden Luftblasen auf der Kontaktfläche des resultierenden Fahrzeugluftreifens und führt zusätzlich zu einer besseren Haftung des erfindungsgemäßen Fahrzeugluftreifens aufgrund der weiteren Kontaktfläche des Fahrzeugluftreifens.

Bevorzugt ist daher auch ein erfindungsgemäßes Verfahren wie vorstehend beschrieben oder wie vorstehend als bevorzugt beschrieben, wobei der erste Cap-Abschnitt keine Aussparungen auf der Oberfläche umfasst.

Bevorzugt ist ein erfindungsgemäßes Verfahren wie vorstehend beschrieben oder wie vorstehend als bevorzugt beschrieben, wobei in Schritt C) die mehreren weiteren Kautschukkomponenten des zweite Cap-Abschnitts so aufgewickelt wird, dass die mehreren weiteren Kautschukkomponenten mindestens eine oder mehrere Cap-Komponenten des in Schritt C) entstehenden Reifenrohlings bildet, wobei die mehreren weiteren Kautschukkomponenten zusätzlich auch noch eine, zwei, drei oder vier Wing-Komponenten bilden können.

Ein Vorteil des vorstehend beschriebenen Aspekts der vorliegenden Erfindung ist, dass Wing-Komponenten häufig sehr filigran sind nur einen kleinen Teil des Laufstreifens ausmachen und somit besonders vorteilhaft mittels des besagten Aufwickelprozess hergestellt werden können.

Bevorzugt ist ein erfindungsgemäßes Verfahren wie vorstehend beschrieben oder wie vorstehend als bevorzugt beschrieben, wobei das Verarbeiten in Schritt B) mittels einer Schneideinheit durchgeführt wird, sodass ein Teil des Kautschukprofils herausgeschnitten wird, welches der Länge nach dem Umfang des Laufstreifens des in Schritt C) entstehenden Reifenrohlings entspricht.

Bevorzugt ist ein erfindungsgemäßes Verfahren wie vorstehend beschrieben oder wie vorstehend als bevorzugt beschrieben, wobei die in Schritt C) aufgewickelte eine weitere Kautschukkomponente oder mindestens eine der mehreren weitere Kautschukkomponenten zeitlich vor dem Schritt C) mittels eines Extruderkopfes extrudiert wird und bevorzugt zeitlich vor dem Schritt C) und nach diesem Extrudieren kalandriert werden, besonders bevorzugt so kalandriert wird, dass die eine oder die mindestens eine weitere Kautschukkomponente einen trapezförmigen, rechteckigen oder rundlichen Querschnitt aufweist, welcher eine maximale Erstreckung von 0,1 m aufweist, ganz besonders bevorzugt eine maximale Erstreckung von 0,05 m.

Ein Vorteil des vorstehend beschriebenen Aspekts der vorliegenden Erfindung ist, dass durch das Formgeben mittels Kalandrierens formgetreuere Kautschukkomponenten und glattere Oberflächen hergestellt werden können und somit die vorstehend beschriebenen Vorteile besser eingestellt werden können.

Bevorzugt ist ein erfindungsgemäßes Verfahren wie vorstehend beschrieben oder wie vorstehend als bevorzugt beschrieben, wobei in Schritt C) die eine weitere Kautschukkomponente oder mindestens eine der mehreren weitere Kautschukkomponenten zeitlich vor dem Schritt C) mittels einer Temperiereinheit temperiert wird, bevorzugt sodass die eine oder die mindestens eine weitere Kautschukkomponente eine Temperatur im Bereich von 40 °C bis 130 °C aufweist, bevorzugt im Bereich von 80°C bis 130°C.

Ein Vorteil des vorstehend beschriebenen Aspekts der vorliegenden Erfindung ist, dass Kautschukmischungen bei 40 °C und insbesondere ab 80 °C besonders gut aufeinander haften und somit der resultierende Fahrzeugluftreifen noch weniger anfällig für Risse zwischen den aufgewickelten und den anderen Kautschukkomponenten ist.

In besonders hohem Maße bevorzugt ist ein erfindungsgemäßes Verfahren wie vorstehend beschrieben
umfassend die folgenden Schritte:
A) Ausformen mindestens einer Kautschukmischung zur Herstellung eines ersten Cap-Abschnittes eines Laufstreifens eines Fahrzeugluftreifens, sodass ein Kautschukprofil zur Herstellung eines ersten Cap-Abschnittes eines Laufstreifens eines Fahrzeugluftreifens entsteht,
B) Verarbeiten des Kautschukprofils, sodass ein erster Cap-Abschnitt zur Herstellung eines Laufstreifenabschnittes eines Fahrzeugluftreifens resultiert,
B-C) Auflegen und Spleißen des ersten Cap-Abschnittes zur Herstellung eines Laufstreifenabschnittes eines Fahrzeugluftreifens auf eine Reifenaufbautrommel,
C) Helikales Aufwickeln mehrerer weiterer Kautschukkomponenten auf den ersten Cap-Abschnitt zur Herstellung eines Laufstreifenabschnittes eines Fahrzeugluftreifens mittels Strip-Winding, sodass ein Reifenrohling zum Vulkanisieren entsteht, wobei der Reifenrohling einen unvulkanisierten Laufstreifen mit einem zweiten Cap-Abschnitt bestehend aus der mehreren weiteren Kautschukkomponenten und mit dem ersten Cap-Abschnitt umfasst,
D) Vulkanisieren des in Schritt C) entstandenen Reifenrohlings, sodass ein Fahrzeugluftreifen umfassend einen Laufstreifen mit dem ersten Cap-Abschnitt und mit dem zweiten aus den mehreren Kautschukmischungen bestehenden Cap-Abschnitt entsteht,
wobei
- die Gesamtfläche des Querschnittes des zweiten Cap-Abschnittes des in Schritt D) resultierenden Fahrzeugluftreifens maximal einem Drittel der Gesamtfläche des Querschnittes des gesamten Laufstreifens des in Schritt D) resultierenden Fahrzeugluftreifens entspricht,
- das Kautschukprofil zur Herstellung eines ersten Cap-Abschnittes eines Laufstreifens eines Fahrzeugluftreifens so ausgebildet ist, dass das Kautschukprofil einen rechteckigen oder trapezförmigen zur Längsrichtung senkrecht verlaufende Querschnitt aufweist, wobei die Quer- oder Höhenerstreckung des Querschnitts im Bereich von 0,1 bis 1 m liegt,
- in Schritt C) eine erste Schicht des zweiten Cap-Abschnittes des Laufstreifens des Fahrzeugluftreifens entsteht, wobei die erste Schicht aus nebeneinander angeordneten weiterer Kautschukkomponenten besteht, und das Verfahren zusätzlich den folgenden Schritt C-D) umfasst:
   C-D) Aufwickeln der einen oder der mehreren weiteren Kautschukkomponenten auf die in Schritt C) entstandene erste Schicht des zweiten Cap-Abschnittes zur Herstellung eines Laufstreifenabschnittes des Fahrzeugluftreifens,
- der erste Cap-Abschnitt in Schritt B-C) so aufgelegt wird, dass der erste Cap-Abschnitt mindestens eine Cap-Komponente des in Schritt C) entstehenden Reifenrohlings bildet,
- der zweite Cap-Abschnitt in Schritt C) so aufgewickelt wird, dass der zweite Cap-Abschnitt eine oder mehrere Cap-Komponenten des Reifenrohlings umfasst,
- das Verarbeiten in Schritt B) mittels einer Schneideinheit durchgeführt wird, sodass ein Teil des Kautschukprofils herausgeschnitten wird, welches der Länge nach dem Umfang des Laufstreifens des in Schritt C) entstehenden Reifenrohlings entspricht,
- wobei die in Schritt C) aufgewickelte mindestens eine Kautschukkomponente der mehreren weitere Kautschukkomponenten zeitlich vor dem Schritt C) mittels eines Extruderkopfes extrudiert wird und bevorzugt zeitlich vor dem Schritt C) und nach diesem Extrudieren kalandriert werden, sodass die eine oder die mindestens eine weitere Kautschukkomponente einen trapezförmigen, rechteckigen oder rundlichen Querschnitt aufweist, welcher eine maximale Erstreckung von 0,05 m aufweist,
- die in Schritt C) aufgewickelte eine weitere Kautschukkomponente oder mindestens eine der mehreren weitere Kautschukkomponenten zeitlich vor dem Schritt C) mittels einer Temperiereinheit temperiert wird, sodass die eine oder die mindestens eine weitere Kautschukkomponente eine Temperatur im Bereich von 80 °C bis 100 °C aufweist.

Die vorstehend beschriebenen vorteilhaften Aspekte eines erfindungsgemäßen Verfahrens zum Herstellen eines Fahrzeugluftreifens gelten auch für sämtliche Aspekte einer nachstehend beschriebenen Vorrichtung und die nachstehend diskutierten vorteilhaften Aspekte erfindungsgemäßer Vorrichtungen gelten entsprechend für sämtliche Aspekte eines erfindungsgemäßen Verfahrens zum Herstellen eines Fahrzeugluftreifens.

Die Erfindung betrifft auch eine Vorrichtung zur Durchführung eines Verfahrens wie vorstehend beschrieben oder wie vorstehend als bevorzugt beschrieben, wobei die Vorrichtung mindestens eine Strip-Winding-Einheit, ein oder mehrere Extruderköpfe und eine Formeinheit zum Formen von Kautschukprofilen aus einer, zwei, drei, vier, fünf, sechs oder mehr als sechs Kautschukkomponenten aufweist, wobei bevorzugt die Strip-Winding-Einheit, der mindestens eine Extruderkopf und die Formeinheit so angeordnet sind und dazu ausgerichtet sind, dass die Strip-Winding-Einheit mindestens eine Kautschukkomponente auf ein mittels der Formeinheit ausgeformtes Kautschukprofil zur Herstellung eines Laufstreifenabschnittes aufwickeln kann.

Bevorzugt ist eine Vorrichtung wie vorstehend beschrieben oder wie vorstehend als bevorzugt beschrieben, wobei die Vorrichtung zusätzlich mindestens eine Auflegeinheit, einen Extruder, Fördermittel und/oder eine Zuschneideinheit zum Herstellen von Cap-Abschnitten aus einem mittels des einen Extruders extrudierten Kautschukprofil umfasst, wobei die Formeinheit bevorzugt eine Vor- und/oder Endschablone zum Ausformen von Kautschukprofilen umfasst und prozesstechnisch dem einen Extruder nachgeschaltet ist.

Ein Vorteil des vorstehend beschriebenen Aspekts der vorliegenden Erfindung ist, dass das Aufwickeln mittels Strip-Winding auf einer Auflegeinheit, insbesondere auf einer Trommeleinheit, präziser und schneller erfolgen kann als auf nicht runden Auflegeinheiten.

Die vorstehend beschriebenen vorteilhaften Aspekte eines erfindungsgemäßen Verfahrens zum Herstellen eines Fahrzeugluftreifens und einer erfindungsgemäßen Vorrichtung zur Durchführung eines erfindungsgemäßen Verfahrens gelten auch für sämtliche Aspekte einer nachstehend beschriebenen Verwendung und die nachstehend diskutierten vorteilhaften Aspekte erfindungsgemäßer Verwendungen gelten entsprechend für sämtliche Aspekte eines erfindungsgemäßen Verfahrens zum Herstellen eines Fahrzeugluftreifens und einer erfindungsgemäßen Vorrichtung zur Durchführung eines erfindungsgemäßen Verfahrens.

Die Erfindung betrifft auch eine Verwendung einer Strip-Winding-Einheit zum Aufwickeln einer oder mehrerer Kautschukkomponenten auf einen ersten unvulkanisierten Cap-Abschnitt eines Reifenrohlings oder auf einen ersten unvulkanisierten Cap-Abschnitt zur Herstellung eines Laufstreifenabschnittes eines Reifenrohlings, wobei die eine Kautschukkomponente bevorzugt in Form eines Streifens oder jede der mehreren Kautschukkomponenten bevorzugt jeweils in Form eines Streifens auf den ersten unvulkanisierten Cap-Abschnitt des Reifenrohlings oder auf den ersten unvulkanisierten Cap-Abschnitt zur Herstellung eines Laufstreifenabschnittes eines Reifenrohlings aufgewickelt wird. Besonders bevorzugt liegt hierbei die eine Kautschukkomponente in Form eines Streifens wie vorstehend für eine n Kautschukstrang beschrieben vor.

Bevorzugt ist eine Verwendung wie vorstehend beschrieben oder wie vorstehend als bevorzugt beschrieben, wobei der erste unvulkanisierte Cap-Abschnitt als ausgeformtes Kautschukprofils vorliegt.

Die vorstehend beschriebenen vorteilhaften Aspekte eines erfindungsgemäßen Verfahrens zum Herstellen eines Fahrzeugluftreifens und einer erfindungsgemäßen Vorrichtung zur Durchführung eines erfindungsgemäßen Verfahrens sowie erfindungsgemäßer Verwendungen gelten auch für sämtliche Aspekte eines nachstehend beschriebenen Fahrzeugluftreifens und die nachstehend diskutierten vorteilhaften Aspekte erfindungsgemäßer Fahrzeugluftreifen gelten entsprechend für sämtliche Aspekte eines erfindungsgemäßen Verfahrens zum Herstellen eines Fahrzeugluftreifens und einer erfindungsgemäßen Vorrichtung zur Durchführung eines erfindungsgemäßen Verfahrens sowie erfindungsgemäßer Verwendungen.

Die Erfindung betrifft auch einen Fahrzeugluftreifen mit einem Laufstreifen, herstellbar oder bevorzugt hergestellt nach einem Verfahren wie vorstehend beschrieben, wobei der Laufstreifeneinen ersten Laufstreifenabschnitt und ein zweiten Laufstreifenabschnitt aufweist, wobei der zweite Laufstreifenabschnitt mittels Strip-Windung auf den ersten Laufstreifenabschnitt aufgewickelt wurde.

Bevorzugt ist ein Fahrzeugluftreifen wie vorstehend beschrieben oder wie vorstehend als bevorzugt beschrieben, umfassend einen Laufstreifen, wobei der Laufstreifen mindestens aus einem ersten und zweiten Cap-Abschnitt, welche bevorzugt wie vorstehend beschrieben ausgebildet sind, und einem radial unterhalb dieser Cap-Abschnitte liegenden Base-Komponente und optional aus einem oder zwei Wing-Komponenten besteht.

### Figurenbeschreibung:

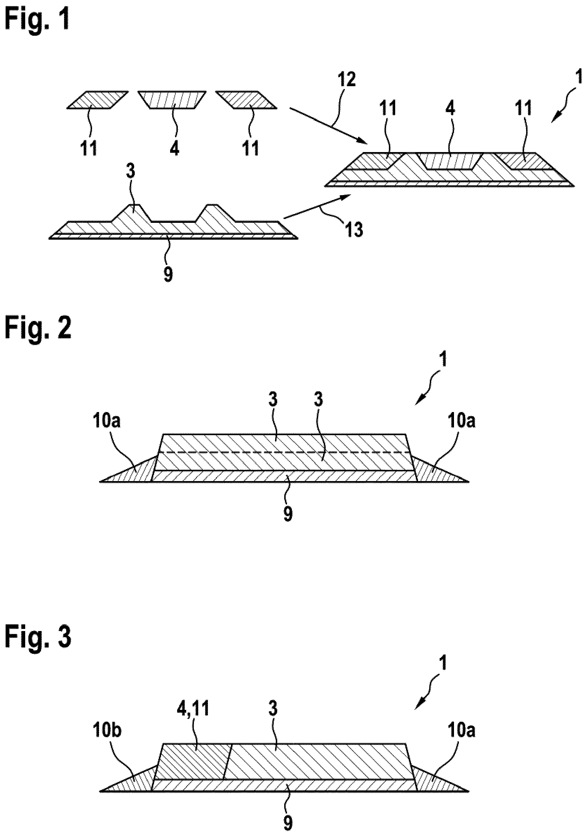

- Figur 1:: Grundprinzip eines erfindungsgemäßen Verfahrens zum Herstellen eines Laufstreifens eines Fahrzeugluftreifens;
- Figur 2:: Querschnitt eines schematisch dargestellten Multi-Komponenten-Laufstreifens eines ausschließlich mittels der im Stand der Technik bekannten Extrusion hergestellten Reifenrohlings, wobei der Multi-Komponenten-Laufstreifens aus zwei annährend gleichgroßen Cap-Komponenten, zwei Wingkomponenten und einer Base besteht,
- Figur 3:: Querschnitt eines schematisch dargestellten Multi-Komponenten-Laufstreifens eines mittels eines erfindungsgemäßen Verfahrens hergestellten Reifenrohlings, wobei der Multi-Komponenten-Laufstreifens aus einer ersten und einem zweiten Cap-Komponente, zwei Wingkomponenten und einer Base besteht und die außenschulterseitige Cap- und Wing-Komponente mittels eines Strip-Winding-Verfahrens hergestellt wurde;

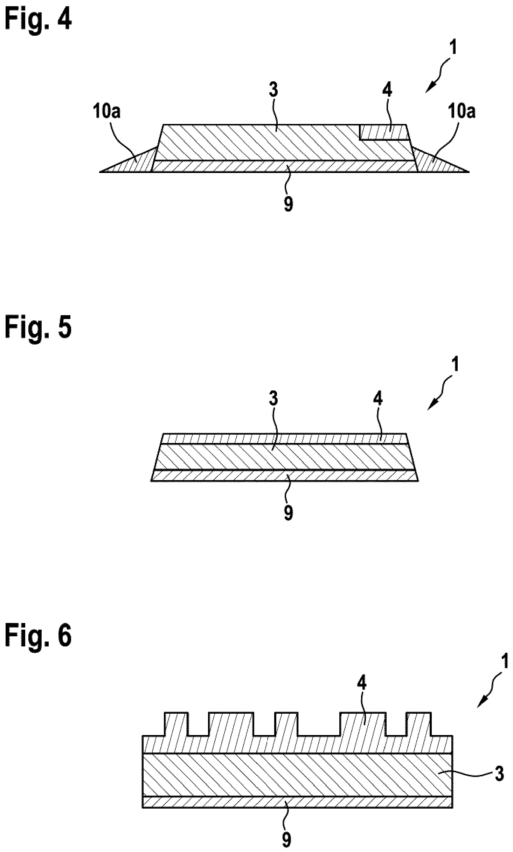

- Figur 4:: Querschnitt eines schematisch dargestellten Multi-Komponenten-Laufstreifens eines mittels eines erfindungsgemäßen Verfahrens hergestellten Reifenrohlings, wobei der Multi-Komponenten-Laufstreifens aus einer ersten und einem zweiten Cap-Komponente, zwei Wingkomponenten und einer Base besteht und die kleiner innenschulterseitige Cap-Komponente mittels eines Strip-Winding-Verfahrens hergestellt wurde;
- Figur 5:: Querschnitt eines schematisch dargestellten Multi-Komponenten-Laufstreifens eines mittels eines erfindungsgemäßen Verfahrens hergestellten Reifenrohlings, wobei der Multi-Komponenten-Laufstreifens aus einer ersten und einem zweiten Cap-Komponente, zwei Wingkomponenten und einer Base besteht und die kleiner und im Vergleich zur anderen Cap-Komponente wesentlich dünnere Cap-Komponente mittels eines Strip-Winding-Verfahrens hergestellt wurde;
- Figur 6:: Querschnitt eines schematisch dargestellten Multi-Komponenten-Laufstreifens eines mittels eines erfindungsgemäßen Verfahrens hergestellten Reifenrohlings, wobei der Multi-Komponenten-Laufstreifens aus einer ersten und einem zweiten Cap-Komponente, zwei Wingkomponenten und einer Base besteht und die geometrisch anspruchsvollere und im Vergleich zur anderen Cap-Komponente wesentlich dünnere Cap-Komponente mittels eines Strip-Winding-Verfahrens hergestellt wurde;

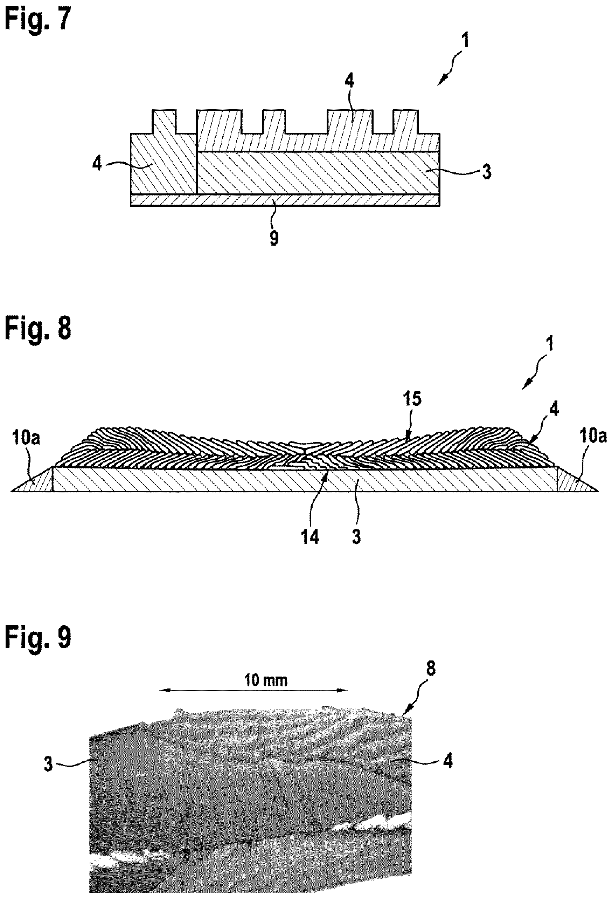

- Figur 7:: Querschnitt eines schematisch dargestellten Multi-Komponenten-Laufstreifens eines mittels eines erfindungsgemäßen Verfahrens hergestellten Reifenrohlings, wobei der Multi-Komponenten-Laufstreifens aus einer ersten und einem drei Cap-Komponente, zwei Wingkomponenten und einer Base besteht und die zwei im Vergleich zur dritten Cap-Komponente geometrisch wesentlich anspruchsvolleren Cap-Komponente mittels eines Strip-Winding-Verfahrens hergestellt wurden;
- Figur 8:: Querschnitt eines schematisch dargestellten Multi-Komponenten-Laufstreifens eines mittels eines erfindungsgemäßen Verfahrens hergestellten Reifenrohlings, wobei der Multi-Komponenten-Laufstreifens aus einer ersten und einem drei Cap-Komponente, zwei Wingkomponenten und einer Base besteht und die drei Cap-Komponente mittels eines Strip-Winding-Verfahrens hergestellt wurden;
- Figur 9:: Photographische Aufnahme eines Querschnitts eines mittels eines erfindungsgemäßen Verfahrens hergestellten Fahrzeugluftreifens umfassend eine extrudierte Cap-Komponente und eines mittels Strip-Winding aufgewickelte Cap-Komponente sowie einer Base-Komponenten auf einer Spulbandagenlage.

Figur 1 zeigt eine schematische Darstellung eines erfindungsgemäßen Herstellungsverfahrens zum Herstellen eines Laufstreifens eines Fahrzeugluftreifens, wobei durch ein herkömmliches Extrusionsverfahren 13 einer Base-Komponenten 9 und eine Cap-Komponente 3 hergestellt werden und durch den Strip-Winding-Prozess 12 zwei Schulter-Abschnitte 11 und ein zweiter Cap-Abschnitt 4 zur Herstellung eines Laufstreifenabschnittes eines Multi-Komponenten-Laufstreifens 1 hergestellt werden. Sie ist dabei ersichtlich, dass die Komponenten 4, 11, welche mit dem Strip-Winding-Prozess 12 hergestellt wurden, radial außerhalb auf den mittels des herkömmlichen Extrusionsverfahrens 13 hergestellten Komponenten 3, 9 eines Laufstreifens 1 liegen. Da die radial äußeren Komponenten 4, 11, sich von Reifen zu Reifen häufiger unterscheiden, kann der Herstellungsprozess daher beschleunigt werden, indem zum Herstellen dieser zweiten Cap-Abschnitte 4 der besagte Strip-Winding-Prozess 12 eingesetzt wird.

Figur 2 zeigt eine schematische Darstellung eines Querschnitts eines im Stand der Technik bekannten Multi-Komponenten-Laufstreifens 1, welche ausschließlich aus mittels des herkömmlichen Extrusionsverfahrens hergestellten Komponenten aufgebaut ist. Der Multi-Komponenten-Laufstreifen 1 aus Figur 2 umfasst zwei Wing-Komponenten 10a, zwei Cap-Komponenten 3 und einer Base-Komponente 9.

Figur 3 zeigt eine schematische Darstellung eines Querschnitts eines mittels des erfindungsgemäßen Verfahrens hergestellten Multi-Komponenten-Laufstreifens 1 in einer ersten Ausführungsform, wobei der Laufstreifen 1 eine Base-Komponente 9, eine ausgeformten Wing-Komponente 10a, einen ersten Cap-Abschnitt 3, einen aufgewickelten Schulter-Abschnitt 11 als zweiten Cap-Abschnitt 4 und eine aufgewickelte Wing-Komponente 10b aufweist. Es ist vorteilhaft den zweiten Cap-Abschnitt 4 mittels des Aufwickelprozess es herzustellen, da dieser Cap-Abschnitt 4 einen kleineren Teil des Querschnitts des Laufstreifens 1 ausmacht und somit filigraner und schwerer zu extrudieren ist. Zudem unterscheidet sich häufig die Belastung der beiden Schulter-Abschnitte eines Laufstreifens, wodurch diese beiden Abschnitte mit unterschiedlichen Kautschukmischungszusammensetzungen hergestellt werden müssen, was in Figur 3 mit dem Schulter-Abschnitt 11 über das Strip-Winding-Verfahren schnell und präzise durchgeführt werden kann.

Figur 4 zeigt eine schematische Darstellung eines Querschnitts eines mittels des erfindungsgemäßen Verfahrens hergestellten Multi-Komponenten-Laufstreifens 1 in einer weiteren Ausführungsform, wobei der Laufstreifen 1 eine Base-Komponente 9, zwei ausgeformten Wing-Komponenten 10a, einen ersten Cap-Abschnitt 3 und einen aufgewickelten zweiten Cap-Abschnitt 4 aufweist. Insbesondere bei Cap-Abschnitten wie Cap-Abschnitt 4, welche nicht die Base-Komponenten 9 kontaktieren und sich nicht über die gesamte Breite des Laufstreifens 1 erstrecken, ist es schwierig die Kautschukkomponente des Cap-Abschnittes 4 formgenau mittels eines herkömmlichen Extrusionsprozesses auszuformen. Diese Nachteile können bei einem erfindungsgemäßen Herstellungsverfahren für einen Laufstreifen eines Fahrzeugluftreifens überwunden werden.

Figur 5 zeigt eine schematische Darstellung eines Querschnitts eines mittels des erfindungsgemäßen Verfahrens hergestellten Multi-Komponenten-Laufstreifens 1 in einer weiteren Ausführungsform, wobei der Laufstreifen 1 eine Base-Komponente 9, einen ersten Cap-Abschnitt 3 und einen zweiten Cap-Abschnitt 4 aufweist. Vorteilhaft bei dieser Ausführung des erfindungsgemäßen Herstellungsverfahrens ist, dass das Verhältnis des Querschnitts des ersten Cap-Abschnittes 3 zu dem Querschnitt des zweiten Cap-Abschnitts 4 präziser eingestellt werden kann, wenn die radial äußere Cap-Abschnitt 4 mittels des Strip-Winding-Prozesses hergestellt wird.

Figur 6 zeigt eine schematische Darstellung eines Querschnitts eines mittels des erfindungsgemäßen Verfahrens hergestellten Multi-Komponenten-Laufstreifens 1 in einer weiteren Ausführungsform, wobei der Laufstreifen 1 eine Base-Komponente 9, einen ersten Cap-Abschnitt 3 und einen zweiten Cap-Abschnitt 4 aufweist. Vorteilhaft bei dieser Ausführung des erfindungsgemäßen Herstellungsverfahrens ist, dass das Verhältnis des Querschnitts des ersten Cap-Abschnittes 3 zu dem Querschnitt des zweiten Cap-Abschnitts 4 präziser eingestellt werden kann, wenn die radial äußere Cap-Abschnitt 4 mittels des Strip-Winding-Prozesses hergestellt wird. Zusätzlich kann so die Bodenkontaktfläche des Laufstreifens 1 besser geformt werden, da wie in Figur 6 gezeigt an einigen Stellen mehr Lagen auf dem ersten Cap-Abschnitt 3 aufgewickelt werden können als an anderen.

Figur 7 zeigt eine schematische Darstellung eines Querschnitts eines mittels des erfindungsgemäßen Verfahrens hergestellten Multi-Komponenten-Laufstreifens 1 in einer weiteren Ausführungsform, wobei der Laufstreifen 1 eine Base-Komponente 9, einen ersten Cap-Abschnitt 3 und zwei zweite Cap-Abschnitte 4 aufweist. Vorteilhaft bei dieser Ausführung des erfindungsgemäßen Herstellungsverfahrens ist, dass das Verhältnis des Querschnitts des ersten Cap-Abschnittes 3 zu dem Querschnitt der beiden zweiten Cap-Abschnitts 4 präziser eingestellt werden kann, wenn die radial äußere Cap-Abschnitt 4 mittels des Strip-Winding-Prozesses hergestellt wird. Zusätzlich kann so die Bodenkontaktfläche des Laufstreifens 1 besser geformt werden, da wie in Figur 7 gezeigt an einigen Stellen mehr Lagen auf dem ersten Cap-Abschnitt 3 aufgewickelt werden können als an anderen.

Figur 8 zeigt eine schematische Darstellung eines Querschnitts eines mittels des erfindungsgemäßen Verfahrens hergestellten Multi-Komponenten, Laufstreifens 1 in einer weiteren Ausführungsform, wobei der Laufstreifen 1 keine Base-Komponente, zwei Wing-Komponenten 10a, einen ersten Cap-Abschnitt 3 und zwei zweite Cap-Abschnitte 4 aufweist. Die beiden zweiten Cap-Abschnitte 4 sind dabei in Form von Schichten 14, 15 radial übereinander angeordnet. Auf diese Weise lassen sich sehr schnell beliebig viele Querschnittsprofile eines Laufstreifenabschnittes herstellen.

Figur 9 zeigt ein Foto eines Querschnitts eines Laufstreifens eines erfindungsgemäßen Fahrzeugluftreifens, bei dem deutlich herkömmlich extrudierte erste Cap-Abschnitte 3 von dem aufgewickelten zweiten Cap-Abschnitt 4 unterschieden werden kann. Wie in Figur 9 zu sehen ist, kann auch bei einem Laufstreifen 8 eines bereits vulkanisierten Fahrzeugluftreifens eindeutig festgestellt werden, welche Laufstreifen-Komponente mittels eines herkömmlichen Extrusionsverfahren und welche mittels eines Strip-Winding-Verfahrens hergestellt wurde.

### Bezugszeichenliste:

- 1: Multi-Komponenten-Laufstreifens eines Reifenrohlings
- 2: Kautschukprofil
- 3: erster Cap-Abschnitt zur Herstellung eines Laufstreifenabschnittes eines Multi-Komponenten-Laufstreifens; ausgeformter Cap-Abschnitt
- 4: zweiter Cap-Abschnitt zur Herstellung eines Laufstreifenabschnittes eines Multi-Komponenten-Laufstreifens; aufgewickelter Cap-Abschnitt
- 5: Laufstreifenabschnitt zur Herstellung eines Multi-Komponenten-Laufstreifens
- 6: Kautschukkomponente des ersten Cap-Abschnitt des Multi-Komponenten-Laufstreifens; ausgeformte Kautschukkomponente
- 7: weitere Kautschukkomponenten des zweiten Cap-Abschnitt des Multi-Komponenten-Laufstreifens; aufgewickelte Kautschukkomponente
- 8: Multi-Komponenten-Laufstreifens eines Fahrzeugluftreifens
- 9: Base-Komponente eines Multi-Komponenten-Laufstreifens
- 10a: ausgeformte Wing-Komponente eines Multi-Komponenten-Laufstreifens
- 10b: aufgewickelte Wing-Komponente eines Multi-Komponenten-Laufstreifens
- 11: aufgewickelte Schulter-Abschnitt zur Herstellung eines Reifenschulter eines Multi-Komponenten-Laufstreifens
- 12: Extrusionsverfahren, Ausform-Verfahren mittels einer Endschalbone
- 13: Strip-Winding-Verfahren, Aufwickelprozess
- 14: erste Schicht des zweiten Cap-Abschnittes zur Herstellung eines Laufstreifenabschnittes des Fahrzeugluftreifens
- 15: zweite Schicht des zweiten Cap-Abschnittes zur Herstellung eines Laufstreifenabschnittes des Fahrzeugluftreifens

## Patentansprüche

1. Verfahren zum Herstellen eines Fahrzeugluftreifens, umfassend die folgenden Schritte:
A)Ausformen mindestens einer Kautschukmischung zur Herstellung eines Fahrzeugluftreifens, sodass ein Kautschukprofil (2) zur Herstellung eines ersten Cap-Abschnittes (3) eines Laufstreifens (8) eines Fahrzeugluftreifens entsteht,
B) Verarbeiten des Kautschukprofils (2), sodass ein erster Cap-Abschnitt (3) eines Laufstreifens (8) eines Fahrzeugluftreifens resultiert, wobei das Verarbeiten unter anderem mittels einer Schneideinheit durchgeführt wird, sodass ein Teil des Kautschukprofils (2) herausgeschnitten wird,
C) Aufwickeln einer oder mehrerer weiterer Kautschukkomponenten (7) auf den ersten Cap-Abschnitt (3) mittels Strip-Winding, sodass ein Reifenrohling zum Vulkanisieren entsteht, wobei der Reifenrohling einen unvulkanisierten Laufstreifen (1)
- mit einem zweiten Cap-Abschnitt (4) bestehend aus der einen oder den mehreren weiteren Kautschukkomponenten (7)
und
- mit dem ersten Cap-Abschnitt (3)
umfasst,
D) Vulkanisieren des entstandenen Reifenrohlings, sodass ein Fahrzeugluftreifen umfassend einen Laufstreifen (1) mit dem ersten Cap-Abschnitt (3) und mit dem zweiten, aus der einen oder den mehreren weiteren Kautschukkomponenten bestehenden Cap-Abschnitt (4) entsteht.

2. Verfahren nach Anspruch 1, wobei die Gesamtfläche des Querschnittes des zweiten Cap-Abschnittes (4) des in Schritt D) resultierenden Fahrzeugluftreifens maximal der Hälfte der Gesamtfläche des Querschnittes des gesamten Laufstreifens (8) des in Schritt D) resultierenden Fahrzeugluftreifens entspricht, bevorzugt maximal ein Drittel der Gesamtfläche des Querschnittes des gesamten Laufstreifens (8) des in Schritt D) resultierenden Fahrzeugluftreifens, besonders bevorzugt maximal ein Viertel der Gesamtfläche des Querschnittes des gesamten Laufstreifens (8) des in Schritt D) resultierenden Fahrzeugluftreifens, ganz besonders bevorzugt maximal ein Fünftel der Gesamtfläche des Querschnittes des gesamten Laufstreifens (8) des in Schritt D) resultierenden Fahrzeugluftreifens.

3. Verfahren nach einem der vorangehenden Ansprüche, wobei der Schritt B) des Verfahrens den folgenden Schritt B-C) umfasst:
B-C) Auflegen des ersten Cap-Abschnittes (3) zur Herstellung eines Laufstreifenabschnittes (5) eines Fahrzeugluftreifens auf eine Auflegeinheit, bevorzugt auf eine Karkasse- und/oder Reifenaufbautrommel, bevorzugt sodass der erste Cap-Abschnitt (3) die Auflegeinheit einmal umgibt, wobei der ersten Cap-Abschnitt auf der Auflegeinheit durch Spleißen eine bevorzugte toroidale Form erhält.

4. Verfahren nach einem der vorangehenden Ansprüche, wobei in Schritt C) eine erste Schicht des zweiten Cap-Abschnittes (4) zur Herstellung eines Laufstreifenabschnittes (5) des Fahrzeugluftreifens entsteht, wobei die erste Schicht (14) aus nebeneinander angeordneten weiterer Kautschukkomponenten (7) besteht, und das Verfahren zusätzlich den folgenden Schritt C-D) umfasst:
C-D) Aufwickeln der einen oder der mehreren weiteren Kautschukkomponenten (7) auf die in Schritt C) entstandene erste Schicht (14) des zweiten Cap-Abschnittes (+4) zur Herstellung eines Laufstreifenabschnittes (5) des Fahrzeugluftreifens.

5. Verfahren nach einem der vorangehenden Ansprüche, wobei das Kautschukprofil (2) zur Herstellung eines ersten Cap-Abschnittes (3) eines Laufstreifens (8) eines Fahrzeugluftreifens
- mittels eines Extruderkopfes extrudiert und bevorzugt mittels einer Vorschablone eines Extruders zu einer Endschablone hingeleitet wird und mittels der Endschablone eines Extruders ausgeformt wird
und/oder
- so ausgebildet ist, dass das Kautschukprofil (2) einen rechteckigen oder trapezförmigen zur Längsrichtung senkrecht verlaufende Querschnitt aufweist, wobei die Quer- oder Höhenerstreckung des Querschnitts bevorzugt im Bereich von 0,1 bis 1 m liegt.

6. Verfahren nach einem der Ansprüche 2 bis 5, wobei das Verarbeiten in Schritt B) unter anderem mittels einer Schneideinheit durchgeführt wird, sodass ein Teil des Kautschukprofils (2) herausgeschnitten wird, welches der Länge nach dem Umfang des Laufstreifens (1) des in Schritt C) entstehenden Reifenrohlings entspricht.

7. Verfahren nach einem der vorangehenden Ansprüche, wobei die in Schritt C) aufgewickelte eine weitere Kautschukkomponente (7) oder mindestens eine der mehreren weitere Kautschukkomponenten (7) zeitlich vor dem Schritt C) mittels eines Extruderkopfes extrudiert wird und bevorzugt zeitlich vor dem Schritt C) und nach diesem Extrudieren kalandriert werden, besonders bevorzugt sodass die eine oder die mindestens eine weitere Kautschukkomponente (7) einen trapezförmigen, rechteckigen oder rundlichen Querschnitt aufweist, welcher eine maximale Erstreckung von 0,1 m aufweist, ganz besonders bevorzugt eine maximale Erstreckung von 0,05 m.

8. Vorrichtung zur Durchführung eines Verfahrens nach einem der vorangehenden Ansprüche, wobei die Vorrichtung mindestens eine Strip-Winding-Einheit, ein oder mehrere Extruderköpfe und eine Formeinheit zum Formen von Kautschukprofilen (2) aus einer, zwei, drei, vier, fünf, sechs oder mehr als sechs Kautschukkomponenten (6) aufweist, wobei bevorzugt die Strip-Winding-Einheit, der mindestens eine Extruderkopf und die Formeinheit so angeordnet sind und dazu ausgerichtet sind, dass die Strip-Winding-Einheit mindestens eine Kautschukkomponente (7) auf ein mittels der Formeinheit ausgeformtes Kautschukprofil (2) zur Herstellung eines Laufstreifenabschnittes (5) aufwickeln kann.

9. Vorrichtung nach dem vorangehenden Anspruch 8, wobei die Vorrichtung zusätzlich mindestens eine Auflegeinheit, einen Extruder, Fördermittel und/oder eine Zuschneideinheit zum Herstellen von Cap-Abschnitten (3) aus einem mittels des einen Extruders extrudierten Kautschukprofil (2) umfasst, wobei die Formeinheit bevorzugt eine Vor- und/oder Endschablone zum Ausformen von Kautschukprofilen (2) umfasst und prozesstechnisch dem einen Extruder nachgeschaltet ist.

10. Verwendung einer Strip-Winding-Einheit zum Aufwickeln einer oder mehrerer Kautschukkomponenten (7) auf einen ersten unvulkanisierten Cap-Abschnitt (3) zur Herstellung eines Laufstreifenabschnittes (5) eines Reifenrohlings, wobei die eine Kautschukkomponente (7) bevorzugt in Form eines Streifens oder jede der mehreren Kautschukkomponenten (7) bevorzugt jeweils in Form eines Streifens auf den ersten unvulkanisierten Cap-Abschnitt (3) zur Herstellung eines Laufstreifenabschnittes (5) des Reifenrohlings aufgewickelt wird.

11. Verwendung nach dem vorangehenden Anspruch, wobei der erste unvulkanisierte Cap-Abschnitt (3) als ausgeformtes Kautschukprofils (2) vorliegt.

12. Fahrzeugluftreifen mit einem Laufstreifen (8), herstellbar oder bevorzugt hergestellt nach einem Verfahren wie in einem der Ansprüche 1 bis 7 definiert, wobei der Laufstreifen (8) einen ersten Laufstreifenabschnitt (5) und ein zweiten Laufstreifenabschnitt (5) aufweist, wobei der zweite Laufstreifenabschnitt (5) mittels Strip-Windung auf den ersten Laufstreifenabschnitt (5) aufgewickelt wurde.

## Claims

1. Method for producing a pneumatic vehicle tyre, comprising the following steps:
A) moulding at least one rubber mixture for producing a pneumatic vehicle tyre, such that a rubber profile (2) for producing a first cap section (3) of a tread (8) of a pneumatic vehicle tyre is obtained,
B) processing the rubber profile (2) such that a first cap section (3) of a tread (8) of a pneumatic vehicle tyre is obtained, the processing being carried out inter alia by means of a cutting unit, such that a part of the rubber profile (2) is cut out,
C) winding one or several further rubber components (7) onto the first cap section (3) by means of strip winding, such that a green tyre is obtained for vulcanization, the green tyre comprising an unvulcanized tread (1)
- with a second cap section (4) consisting of the one or the several further rubber components (7)
and
- with the first cap section (3),
D) vulcanizing the resulting green tyre, such that a pneumatic vehicle tyre comprising a tread (1) with the first cap section (3) and with the second cap section (4) composed of the one or the several further rubber components is obtained.

2. Method according to Claim 1, wherein the total area of the cross section of the second cap section (4) of the pneumatic vehicle tyre obtained in step D) corresponds to a maximum of half the total area of the cross section of the entire tread (8) of the pneumatic vehicle tyre obtained in step D), preferably a maximum of one third of the total area of the cross section of the entire tread (8) of the pneumatic vehicle tyre obtained in step D), particularly preferably a maximum of one quarter of the total area of the cross section of the entire tread (8) of the pneumatic vehicle tyre obtained in step D), very particularly preferably a maximum of one fifth of the total area of the cross section of the entire tread (8) of the pneumatic vehicle tyre obtained in step (D).

3. Method according to one of the preceding claims, wherein step B) of the method comprises the following step B-C):
B-C) placing the first cap section (3) for production of a tread section (5) of a pneumatic vehicle tyre onto a lay-up unit, preferably onto a carcass and/or tyre building drum, preferably such that the first cap section (3) surrounds the lay-up unit once, wherein the first cap section on the lay-up unit is given a preferred toroidal shape by splicing.

4. Method according to one of the preceding claims, wherein in step C) a first layer of the second cap section (4) for production of a tread section (5) of the pneumatic vehicle tyre is obtained, the first layer (14) consisting of further rubber components (7) arranged next to one another, and the method additionally comprises the following step C-D):
C-D) winding the one or the several further rubber components (7) onto the first layer (14) of the second cap section (4) obtained in step C) in order to produce a tread section (5) of the pneumatic vehicle tyre.

5. Method according to one of the preceding claims, wherein the rubber profile (2) for producing a first cap section (3) of a tread (8) of a pneumatic vehicle tyre
- is extruded by means of an extruder head and preferably guided to a final die by means of a pre-die of an extruder and is shaped by means of the final die of an extruder
and/or
- is designed such that the rubber profile (2) has a rectangular or trapezoidal cross section running perpendicular to the longitudinal direction, wherein the transverse or vertical extent of the cross section is preferably in the range from 0.1 to 1 m.

6. Method according to one of Claims 2 to 5, wherein the processing in step B) is carried out inter alia by means of a cutting unit, so that a part of the rubber profile (2) is cut out which preferably corresponds to the length of the circumference of the tread (1) of the green tyre obtained in step C).

7. Method according to one of the preceding claims, wherein the one further rubber component (7) or at least one of the several further rubber components (7) wound up in step C) is extruded by means of an extruder head prior to step C) and calendered after this extrusion, preferably prior to step C), particularly preferably such that the one or the at least one further rubber component (7) has a trapezoidal, rectangular or round cross section, which has a maximum extent of 0.1 m, very particularly preferably a maximum extent of 0.05 m.

8. Device for carrying out a method according to one of the preceding claims, wherein the device has at least one strip winding unit, one or more extruder heads, and a moulding unit for moulding rubber profiles (2) from one, two, three, four, five, six or more than six rubber components (6), wherein preferably the strip winding unit, the at least one extruder head and the moulding unit are arranged and oriented such that the strip winding unit can wind at least one rubber component (7) onto a rubber profile (2), shaped by the moulding unit, for the production of a tread section (5).

9. Device according to Claim 8, wherein the device additionally comprises at least one lay-up unit, an extruder, conveying means and/or a cutting unit for producing cap sections (3) from a rubber profile (2) extruded by means of the one extruder, wherein the moulding unit preferably comprises a pre-die and/or final die for shaping rubber profiles (2) and, in terms of process technology, is connected downstream of the one extruder.

10. Use of a strip winding unit for winding one or more rubber components (7) onto a first unvulcanized cap section (3) for the production of a tread section (5) of a green tyre, wherein the one rubber component (7) is wound preferably in the form of a strip, or each of the several rubber components (7) is wound in each case preferably in the form of a strip, onto the first unvulcanized cap section (3) in order to produce a tread section (5) of the green tyre.

11. Use according to the preceding claim, wherein the first unvulcanized cap section (3) is in the form of a moulded rubber profile (2).

12. Pneumatic vehicle tyre with a tread (8), producible or preferably produced by a method as defined in one of Claims 1 to 7, wherein the tread (8) has a first tread section (5) and a second tread section (5), wherein the second tread section (5) was wound onto the first tread section (5) by means of strip winding.

## Revendications

1. Procédé de fabrication d'un pneumatique pour véhicule, comprenant les étapes suivantes :
A) moulage d'au moins un mélange de caoutchouc pour la fabrication d'un pneumatique de véhicule, de sorte qu'il en résulte un profilé en caoutchouc (2) pour la fabrication d'une première section recouvrante (3) d'une bande de roulement (8) d'un pneumatique de véhicule,
B) traitement du profilé en caoutchouc (2) de manière à obtenir une première section recouvrante (3) d'une bande de roulement (8) d'un pneumatique de véhicule, le traitement étant effectué, entre autres, au moyen d'une unité de coupe de manière à découper une partie du profilé en caoutchouc (2),
C) enroulement d'un ou de plusieurs autres composants en caoutchouc (7) sur la première section recouvrante (3) au moyen d'un enroulement de bande ("strip-winding" en anglais), de sorte qu'il en résulte une ébauche de pneumatique pour la vulcanisation, l'ébauche de pneumatique comprenant une bande de roulement (1) non vulcanisée
- avec une deuxième section recouvrante (4) constituée de l'un ou de plusieurs autres composants en caoutchouc (7)
et
- avec la première section recouvrante (3),
D) vulcanisation de l'ébauche de pneumatique obtenue, de sorte qu'un pneumatique de véhicule est formé, comprenant une bande de roulement (1) avec la première section recouvrante (3) et avec la deuxième section recouvrante (4) constituée dudit un ou plusieurs autres composants en caoutchouc.

2. Procédé selon la revendication 1, dans lequel la surface totale de la section transversale de la deuxième section recouvrante (4) du pneumatique de véhicule résultant de l'étape D) correspond au maximum à la moitié de la surface totale de la section transversale de l'ensemble de la bande de roulement (8) du pneumatique de véhicule résultant de l'étape D), de préférence au maximum à un tiers de la surface totale de la section transversale de l'ensemble de la bande de roulement (8) du pneumatique de véhicule résultant de l'étape D), de manière particulièrement préférée, au maximum à un quart de la surface totale de la section transversale de l'ensemble de la bande de roulement (8) du pneumatique de véhicule résultant de l'étape D), de manière tout à fait préférée, au maximum à un cinquième de la surface totale de la section transversale de l'ensemble de la bande de roulement (8) du pneumatique de véhicule résultant de l'étape D).

3. Procédé selon l'une des revendications précédentes, dans lequel l'étape B) du procédé comprend l'étape B-C) suivante :
B-C) mise en place de la première section recouvrante (3) pour la fabrication d'une portion de bande de roulement (5) d'un pneumatique de véhicule sur une unité de pose, de préférence sur un tambour de carcasse et/ou de confection de pneumatique, de préférence de sorte que la première section recouvrante (3) entoure une fois l'unité de pose, la première section recouvrante prenant, sur l'unité de pose, une forme toroïdale préférée par épissurage.

4. Procédé selon l'une des revendications précédentes, dans lequel, à l'étape C), on obtient une première couche de la deuxième section recouvrante (4) pour la fabrication d'une portion de bande de roulement (5) du pneumatique de véhicule, la première couche (14) étant constituée d'autres composants en caoutchouc (7) disposés les uns à côté des autres, et le procédé comprenant en outre l'étape C-D) suivante :
C-D) enroulement d'un ou de plusieurs autres composants en caoutchouc (7) sur la première couche (14) de la deuxième section recouvrante (4) formée à l'étape C) pour la fabrication d'une portion de bande de roulement (5) du pneumatique de véhicule.

5. Procédé selon l'une des revendications précédentes, dans lequel le profilé en caoutchouc (2) pour la fabrication d'une première section recouvrante (3) d'une bande de roulement (8) d'un pneumatique de véhicule
- est extrudé au moyen d'une tête d'extrusion et est de préférence acheminé vers un gabarit final au moyen d'un gabarit préliminaire d'une extrudeuse et est formé au moyen du gabarit final d'une extrudeuse,
et/ou
- est conçu de telle sorte que le profilé en caoutchouc (2) présente une section transversale rectangulaire ou trapézoïdale perpendiculaire à la direction longitudinale, l'extension transversale ou en hauteur de la section transversale se situant de préférence dans la gamme allant de 0,1 à 1 m.

6. Procédé selon l'une des revendications 2 à 5, dans lequel le traitement de l'étape B) est réalisé, entre autres, au moyen d'une unité de coupe, de manière à découper une partie de la bande de roulement en caoutchouc (2) qui correspond, en longueur, à la circonférence de la bande de roulement (1) de l'ébauche de pneumatique obtenue à l'étape C).

7. Procédé selon l'une des revendications précédentes, dans lequel l'un des autres composants en caoutchouc (7) enroulé à l'étape C) ou au moins l'un des plusieurs autres composants en caoutchouc (7) est extrudé au moyen d'une tête d'extrusion temporellement avant l'étape C) et, de préférence, calandré temporellement avant l'étape C) et après cette extrusion, de manière particulièrement préférée, de sorte que ledit un ou plusieurs au moins un autre composant en caoutchouc (7) présente une section transversale trapézoïdale, rectangulaire ou ronde, qui présente une extension maximale de 0,1 m, de manière tout à fait préférée une extension maximale de 0,05 m.

8. Dispositif pour la mise en oeuvre d'un procédé selon l'une des revendications précédentes, le dispositif comprenant au moins une unité d'enroulement de bande ("strip-winding" en anglais), une ou plusieurs têtes d'extrusion et une unité de moulage pour le moulage de profilés en caoutchouc (2) à partir d'un, deux, trois, quatre, cinq, six ou plus de six composants en caoutchouc (6), l'unité d'enroulement de bande, ladite au moins une tête d'extrusion et l'unité de moulage étant de préférence agencées et orientées de telle sorte que l'unité d'enroulement de bande est apte à enrouler au moins un composant en caoutchouc (7) sur un profilé en caoutchouc (2) formé au moyen de l'unité de moulage pour fabriquer une portion de bande de roulement (5).

9. Dispositif selon la revendication 8 précédente, le dispositif comprenant en outre au moins une unité de pose, une extrudeuse, des moyens de transport et/ou une unité de découpe pour la fabrication de sections recouvrantes (3) à partir d'un profilé en caoutchouc (2) extrudé au moyen de l'une des extrudeuses, l'unité de moulage comprenant de préférence un gabarit préliminaire et/ou final pour le moulage de profilés en caoutchouc (2) et étant montée en aval de l'une des extrudeuses du point de vue du processus.

10. Utilisation d'une unité d'enroulement de bande ("strip-winding" en anglais) pour enrouler un ou plusieurs composants en caoutchouc (7) sur une première section recouvrante non vulcanisée (3) pour la fabrication d'une portion de bande de roulement (5) d'une ébauche de pneumatique, l'un des composants en caoutchouc (7) étant enroulé de préférence sous la forme d'une bande ou chacun des plusieurs composants en caoutchouc (7) étant enroulé de préférence respectivement sous la forme d'une bande sur la première section recouvrante non vulcanisée (3) pour la fabrication d'une portion de bande de roulement (5) de l'ébauche de pneumatique.

11. Utilisation selon la revendication précédente, dans laquelle la première section recouvrante non vulcanisée (3) se présente sous la forme d'un profilé en caoutchouc moulé (2).

12. Pneumatique pour véhicule comprenant une bande de roulement (8) apte à être fabriquée ou de préférence fabriquée selon un procédé tel que défini dans l'une des revendications 1 à 7, la bande de roulement (8) comprenant une première portion de bande de roulement (5) et une deuxième portion de bande de roulement (5), la deuxième portion de bande de roulement (5) ayant été enroulée sur la première portion de bande de roulement (5) au moyen d'un enroulement de bande ("strip-winding" en anglais).
